# EUROPEAN PATENT APPLICATION

(11) **EP 1 380 521 A1**
(43) Date of publication of application: **14.01.2004**
(21) Application number: 03425458.1
(22) Date of filing: 10.07.2003
(51) Int. Cl.: B65G 47/14

(54) **Apparatus for orientating and feeding articles**

(30) Priority: 12.07.2002 IT FI20020126
(71) Applicant: Leone, Ernesto, 50136 Firenze (IT)
(72) Inventor: Leone, Ernesto, 50136 Firenze (IT)
(74) Representative: Bardini, Marco Luigi

(57) **Abstract**

An apparatus for arranging and feeding articles (A) in a concordantly orientated manner comprises a table (1) with a flat upper surface (1a) suitable for receiving the articles that can be made to revolve about a central axis of rotation (X). A plurality of through seatings (7) are provided on the table (1), each seating being capable of accommodating with a substantially exact fit an article (A) inserted coaxially and with the ends (A1, A2) to be discriminated pointing either upwards or downwards. Pusher means (8) are slidingly engaged in respective seatings (7) and comprise an upper end capable of becoming engaged with an end (A1) of the articles and refusing engagement with the other end (A2). Arranged below the table, a fixed cam (9) extends along an angle swept by the table (1) and causes the pusher means (8) to rise all along said angle, and the articles (A) to be pushed out of the seatings (7). The upper face (1a) of the table (1) is arranged in a position inclined with respect to the plane of the floor, the highest area being the one corresponding to the cam (9), so that the raising of said pusher means (8) will cause only the articles (A) not engaged by the ends of the pusher means (8) to fall along the upper face. Means (12) for picking up and extracting said articles (A) from said seating (7) to feed them to a subsequent workstation, are arranged in the area of said cam (9) in such a way as to pick up only said articles that have remained in position.

## Description

The present invention relates to the field of automatic equipment for handling and feeding articles in industrial production lines. More precisely, it relates to an equipment that, upon receiving articles in a randomly orientated manner, is capable of arranging these articles in a concordantly orientated manner and feeding them in this manner to a workstation situated on the downstream side thereof.

It is very frequent that a certain workstation (for . example, an assembling, filling or packaging station or similar) in an automated industrial production line has to be fed with pieces of a generically elongated shape, as a general rule semi-finished products. The pieces have necessarily to be received in an ordered manner and, above all, when the two ends of the piece differ from each other in shape, with a concordant orientation. In such cases, arrangements have to be made to provide upstream of said station an appropriate equipment that, on receiving the objects in a randomly orientated manner, arranges them in an orderly fashion and then feeds them on the output side with the desired orientation.

Prior art comprises a multiplicity of constructional typologies for equipment of this kind, which may vary according to the shape, the size and the weight of the objects that the equipment is intended to feed. For the purpose of recognizing the shape of the ends of the pieces, condition necessary for arranging them with the proper orientation, and also for materially discriminating the pieces and re-orientating them in the desired manner, recourse is often had to solutions of the mechanical type. These are capable of assuring proper functioning with an adequate reliability at limited production and maintenance costs, and this in direct proportion to their structural simplicity. In many cases, on the other hand, these solutions are also the only practicable ones, because the nature of the objects, the degree of productivity that has to be attained (number of pieces to be fed in unit time) or the environmental conditions (situations exposed to contamination by dust, oil or the like) preclude the use of more sophisticated systems, for example, optical readers or similar devices.

Obviously, the more critical the operating conditions of each specific case, the more difficult does it become to assure satisfactory functioning of the equipment. In particular, difficulties arise when one or more of the following conditions have to be faced: the articles are of small size; the two ends that have to be discriminated are very similar to each other; the required productivity is high; the error margin that can be tolerated is very small or even zero.

It is therefore an object of the present invention to provide an apparatus for arranging and feeding articles in a concordantly orientated manner that makes use of means of discrimination of the mechanical type and assures fully satisfactory functioning in all the operating conditions that have just been enumerated.

In particular, it is an object of the present invention to provide an apparatus of the aforementioned type capable of orientating pieces of a generically elongated shape with ends that are very similar to each other, and this at a high production rate and with an error margin practically equal to zero.

These objects are achieved with the apparatus for arranging and feeding articles in a concordantly orientated manner in accordance with the present invention, the essential characteristics of which are defined in the first of the claims annexed hereto.

The characteristics and advantages of the apparatus in accordance with the present invention will be brought out more clearly by the description about to be given of a particular embodiment thereof, which is given by way of example and is not to be considered limitative in any way, said description making reference to the appended drawings, of which:
- figure 1 shows a schematic side elevation of the apparatus in accordance with the present invention, with part of the exterior torn away;
- figure 2 shows the apparatus of figure 1 as seen from above and in the axial direction indicated by the arrow II; and
- figure 3 shows a section through the apparatus along the arrows III-III of figure 2.

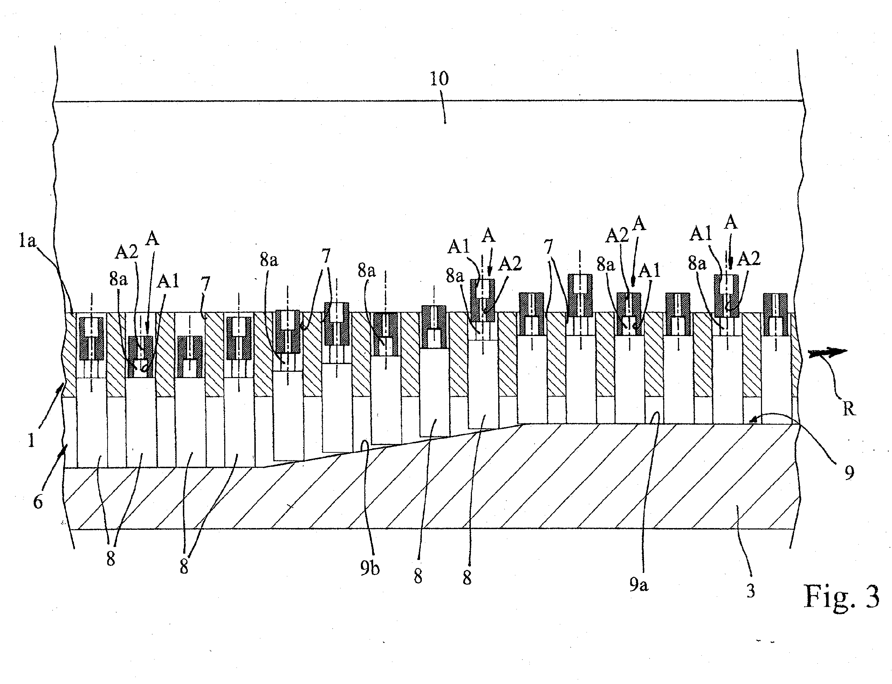

Referring to these figures, the apparatus in accordance with the invention comprises a rotatable table 1 having a circular outline. Onto a flat upper face of table 1 there are fed from above and in a random manner the articles that are to be orientated. The articles, which may be, for example, cylindrical and tubular in form, are shown in section and indicated at the reference letter A in figure 3, which will be considered in greater detail in the continuation of this description.

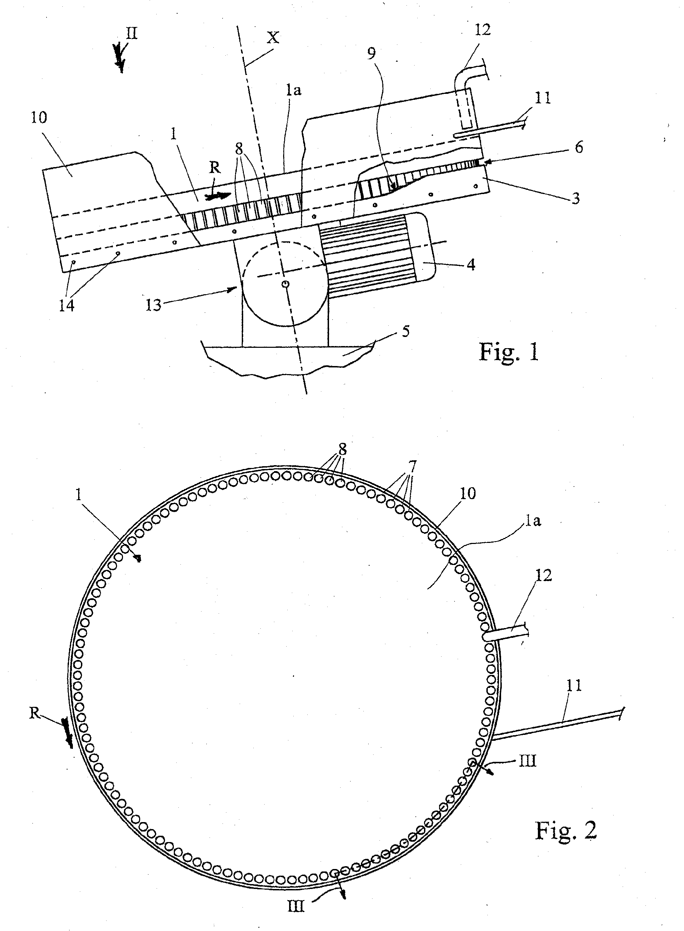

The table 1 is made to rotate about its own central axis, indicated at X, by means of an electric motor 4 situated underneath, as will be described in greater detail further on, which operates the table via drive means not shown in the figures. In the particular case of the example here illustrated, the rotation is in the anticlockwise direction, i.e. in the direction of the arrow R when the apparatus is seen in plan as in figure 2. The rotatable table 1 is supported by a fixed table 3, likewise circular and of the same diameter as the rotatable table, that lies on a plane immediately below and parallel with it. By virtue of the fact that they are arranged a certain distance apart, the two tables form in cooperation a circumferential passage 6. Integral with a lower face 3a of the fixed table 3 there is the motor 4, which operates a transmission shaft (not visible in the figure), coaxial with the axis X, that integrally projects from the rotatable table 1 and passes through the fixed table 3.

As can clearly be seen in figure 3, on the table 1 there is provided a multiplicity of through seatings 7 in proximity of the circumference of the table and equally spaced apart all along this circumference. The seatings 7 open at their upper end onto the flat upper face 1a and at their lower end into the passage 6, all as shown particularly in figure 3. Each seating 7 is capable of accommodating substantially as an exact fit a single article A, inserted coaxially and therefore with the ends to be discriminated pointing either upwards or downwards.

Still referring to figure 3, each seating 7 also accommodates, coaxially and slidably, a cylindrical pusher rod 8. The pusher rods 8 project into the passage 6, bearing with their lower end against the fixed table 3, while the upper end remains inside the respective seatings 7. The fixed table 3, along a part of the circumferential development of the passage 6, forms a cam 9. In practice, the upper edge 9a of the cam 9 raises the bottom of the passage 6 along an angle of a certain size (approximately 90°). The transition towards the upper edge 9a, that is to say, towards the raised area of the bottom of the passage 6, taking the direction of rotation of the rotatable table 1 as reference, is realized by means of a gently inclined ramp 9b.

The upper end of each pusher rod 8 is shaped in such a ways as to be capable of becoming engaged with only one of the ends of the article A. In particular, in the example here illustrated, in which the article A forms cylindrical cavities A1 and A2 at its two ends of, respectively, a larger and a smaller diameter, the pusher rods 8 are provided with cylindrical protuberances 8a capable of becoming engaged with the cavity A1, which has the larger diameter.

The fixed table 3 and with it also the rotatable table 1, is sustained from below by a base 5, partially shown in the figure, by means of a hinge 13 capable of arranging the tables, and especially the flat upper face 1a of the rotatable table 1, in an inclined configuration with respect to the floor plane. More precisely, the hinge 13 is such as to be capable of raising in an adjustable manner the area affected by the cam 9 and lowering the diametrically opposite area, as shown in figure 1.

The apparatus is completed by a collar 10 attached to the circumferential edge of the fixed table 3 and rising to above the flat upper face 1a of the rotatable table 1, thus constituting a radial closure of the passage 6. The attachment of the collar 10 to the table 3 is assured by radial screws 14. Apart from preventing the articles placed on the table 1 from falling off, the collar 10 also serves as supporting element for a nozzle 11 that ejects compressed air onto the table 1. The nozzle 11 is inserted radially into the collar 10 at a height close to the flat upper face 1a and at a point immediately after the point at which there is located the ramp 9b of the cam 9 on the fixed table 3.

Likewise in the area affected by the cam 9, but downstream of the ejector nozzle 11 (always with reference to the direction of rotation of the rotatable table 1), there is also associated with the collar 10 a system for picking up and extracting the articles A from the table 1 in order to feed them to a subsequent workstation. In the illustrated embodiment the system avails itself, for example, of a suction duct 12 that forms part of a pneumatic system that is neither illustrated nor described here, since its characteristics are well known to a person skilled in the art and do not form, as such, the subject-matter of the invention.

In use, the apparatus in accordance with the invention operates in the following manner. The rotatable table 1 is set in motion by the motor 4, thus making the pusher rods 8 rotate around the axis X thanks to the pressure exerted on their upper parts enclosed within the seatings 7. Their lower ends bear against the bottom of the passage 6. As already said, the articles A are fed to the apparatus by letting them drop from above and in abundant quantity onto the rotatable table 1. Due to the effect of the inclination of the table, the articles will collect in the area at the lowest level. Agitated by the rotation of the table, a certain number of articles will come to find themselves in an erect position, that is to say, with their own axis pointing at a right angle with respect to the flat face 1a of the table. In this condition, finding themselves in positions corresponding to the seatings 7, they will come to occupy them and assume a coaxial position therein.

As can be noted in figure 3 (for the first four seatings 7 there shown, starting from the left), the articles A may be arranged with the cavity A1 of the larger diameter that points either upwards or downwards. In the first case the articles A will bear externally against the protuberances 8a of the pusher rods 8, because the cavity A2 of the smaller diameter will not be able to become engaged with this protuberance. In the second case, however, the cavities A1 will become engaged with their respective protuberances 8a and the articles 8a will thus descend more deeply into the seatings 7.

Still referring to figure 3, when the pusher rods 8 encounter the ramp 9b of the cam 9 formed by the fixed table 3, they are pushed from their lower end, so that they will rise and remain in this condition along the whole of the angle affected by the cam. The extent to which they are raised is such that the articles A arranged with the larger cavity A1 pointing upwards will become expelled from the appropriate seatings 7, so as to enable the force of gravity, possibly assisted by the air stream projected by the nozzle 11, to trigger their fall along the flat face 1a of the table 1. Once they have returned to the area at the lowest level, together with articles A that were fed either with or after them, they again take part in the process that has just been described.

The articles A arranged such that the larger cavity A1 points downwards, on the other hand, being firmly engaged with the protuberances 8a of the pusher rods 8 and possibly, as in the illustrated example, being partially sunk in the seatings 7, are capable of resisting both the action of the force of gravity and that of the nozzle 11. Consequently, all the pieces that arrive at the suction duct 12, which has the task of picking up the articles A and feeding them to a downstream workstation, are all orientated in a concordant manner.

It is therefore evident that the apparatus in accordance with the invention fully attains the stated objects with a mechanical solution that is extremely simple from both a constructional and a functional point of view. In particular, thanks to the selection based on whether or not the pusher rods 8 become engaged with one of the two ends of the articles A, it is possible to discriminate pieces with ends that are very similar to each other, for example, like those here described with two opposite cavities of different diameters. Thanks to the fact that the discrimination is made while the articles are stably retained in the seatings 7 and following a precise movement of pure translation, it is possible to reduce the margin of error to practically zero, even when the dimensional difference between the two ends amount to no more than a few tenths of a millimeter. Always making use of the seatings 7, the system for feeding / transporting the articles, given its reliability and speed, is particularly suitable for pieces that are small in size and have to be produced at high production rates, conditions that are particularly difficult to handle with, for example, transportation systems based on vibrations.

Obviously, the upper ends of the pusher rods 8 will be shaped and dimensioned in accordance with the characteristics of the pieces to be discriminated, and can therefore assume even configurations very different from that of the illustrated embodiment. For example, in the case of articles that, rather than cavities, have at their two ends axial protuberances that differ from each other, on the pusher rods there will be formed respective cavities of appropriate size. The inclination of the unit constituted by the fixed and the rotatable table can likewise be adapted to the needs of each specific case, as a function of the weight and the size of the articles. Although the apparatus in accordance with the invention is particularly efficacious for discriminating pieces of small size and / or with ends that are very similar to each other, it can obviously operate, always in an advantageous manner, in less critical situations, with such larger articles as bottles, cans and, in any case, any type of generically elongated article with ends that are different from each other.

Variants and / or modifications may be brought to the apparatus for arranging and feeding articles in a concordantly orientated manner in accordance with the present invention without for that reason departing from the scope of the invention itself.

## Claims

1. An apparatus for arranging and feeding in a concordantly orientated manner articles (A) of a generically elongated shape provided with two different ends (A1 A2) that have to be discriminated, **characterized in that** it comprises: a table (1) with a flat upper surface (1a) suitable for receiving said articles (A) that can be made to revolve about a central axis of rotation (X) at right angles to said flat face (1a); a perimetral collar (10) arranged around said upper face (1a) of said revolving table (1) to prevent said articles (A) from falling off; a plurality of through seatings (7) provided on said table (1) with their axis orthogonal to said flat face (1a) in proximity of the perimeter and along it, each seating being capable of accommodating with a substantially exact fit one of said articles (A) inserted coaxially and with the ends (A1, A2) to be discriminated pointing either upwards or downwards; pusher means (8) slidingly engaged within respective seatings (7) and comprising an upper end (8a) capable of becoming engaged with an end (A1) of said articles (A) and refusing engagement with the other end (A2); means of support (3, 5, 13) of said table (1) arranged below the table and comprising a fixed cam (9) extending along an angle swept by said table (1) so that all along said angle, following a rotation of the table, the cam will cause the pusher means (8) to rise and the articles (A) to be pushed outwards from their respective seatings (7), said means of support (3, 5, 13) being also capable of arranging the upper face (1a) of said table (1) into a position inclined with respect to the plane of the floor, the highest area being the one corresponding to said cam (9), so that the raising of said pusher means (8) by said cam (9) will cause the articles (A) not engaged by the ends (8a) of said pusher means (8) to fall along said upper face (1a), while the other articles, engaged by the ends (8a) of the pusher means (8), remain in position; operating means (4) to make said revolving table rotate around said axis (X); and means (12) for picking up and extracting said articles (A) from said seating (7) to feed them to a subsequent workstation, these means being arranged in the area of said cam (9) in such a way as to pick up only said articles that have remained in position.

2. An apparatus in accordance with claim 1, wherein said means of support (3, 5, 13) comprise a fixed table (3) arranged in parallel with said rotatable table (1) and at a certain distance below it, so that the two tables (1, 3) in cooperation form a circumferential passage (6) onto which there open said seatings (7), said pusher means (8) bearing against the bottom of said passage (6), said bottom being defined by said fixed table (3) and raised in the part corresponding to said cam (9), said fixed table (3) supporting also on its underside said operating means (4), which act on a drive shaft projecting from said rotatable table (1) and passing through said fixed table (3), said means of support (3, 5, 12) further comprising a base (5) that sustains said fixed table (3) by means of a hinge (13) capable of inclining said tables (1, 3) with respect to the plane of the floor.

3. An apparatus in accordance with claim 2, wherein said collar (10) is connected to said fixed table (3) along the circumferential edge thereof and rises, radially closing said passage (6), to above said flat upper face (1a) of the rotatable table (1).

4. An apparatus in accordance with claim 2 or claim 3, wherein said cam (9) comprises a gently inclined ramp (9b) against which said pusher means (8) come to bear with their lower end due to the effect of the rotation of said revolving table (1) and by which they are raised, thereafter remaining in this condition along the entire angle over which said cam (9) extends.

5. An apparatus in accordance with any one of the previous claims, wherein said articles (A) to be discriminated form at their two ends two cylindrical cavities (A1, A2) of different diameters, respectively greater and smaller, said pusher means (8) being provided at their upper ends with respective protuberances (8a) capable of becoming engaged by means of an exact fit with the cavity (A1) of the larger diameter and refusing engagement with the cavity (A2) of the smaller diameter.

6. An apparatus in accordance with any one of the previous claims, wherein the extent to which said pusher means (8) are raised is such as to maintain at least partially accommodated within said seatings (7) the articles (A) that are engaged by the ends (8a) of the pusher means.

7. An apparatus in accordance with any one of the previous claims, comprising means (11) for ejecting a stream of compressed air, associated with said collar (10) in the area over which said cam (9) extends, in order to assist the falling of the articles (A) that are not engaged by the ends (8a) of said pusher means (8).

8. An apparatus in accordance with claim 7, wherein said means (12) for picking up and extracting said articles (A) comprise a suction mouth (12) associated with said collar (10) in the area over which said cam (9) extends, and downstream of said ejection means (11).
